# EUROPÄISCHE PATENTSCHRIFT

(11) **EP 3 176 233 B1**
(45) Veröffentlichungstag und Bekanntmachung des Hinweises auf die Patenterteilung: **05.02.2020**
(21) Anmeldenummer: 16201874.1
(22) Anmeldetag: 02.12.2016
(51) Int. Cl.: C09D 5/00, C09J 101/00

(54) **FASERARMIERTE KITTSPACHTELMASSE ZUM VERFUGEN VON PARKETTBÖDEN**
FIBRE-REINFORCED MASTIC BODY FILLER FOR GROUTING PARQUET FLOOR
MASTIC ARMÉ DE FIBRE DE VERRE POUR LE JOINTOYAGE DE PARQUETS

(30) Priorität: 04.12.2015 DE 102015224326
(43) Veröffentlichungstag der Anmeldung: 07.06.2017
(73) Patentinhaber: Pallmann GmbH, 97076 Würzburg (DE)
(72) Erfinder: Röck, Jochen, 97941 Tauberbischofsheim (DE)
(74) Vertreter: Isarpatent

(56) Entgegenhaltungen:
- EP-A2- 1 983 014
- US-A- 3 891 582

## Beschreibung

Die vorliegende Erfindung betrifft die Verbesserung der technischen Eigenschaften von Kittspachtelmassen, insbesondere Parkettfugenkittlösungen, für Parkettböden.

Kittspachtelmassen, insbesondere Parkettfugenkittlösungen, werden gewöhnlich verwendet, um Fugen bei Holzfußböden, Schwingböden, Holzpflastern, insbesondere Parkettböden zu verfugen. Durch diese Verfugung wird verhindert, dass die Produkte der anschließenden Oberflächenbearbeitung (Lacke, und Öle) in die Fugen eindringen. Die Kittspachtelmassen, insbesondere Parkettfugenkittlösungen, werden dabei üblicherweise mit dem Schleifstaub des Bodens zu einer spachtelfähigen Masse angeteigt, welche vom Verarbeiter in einem Spachtelverfahren in die Fugen eingearbeitet wird. Hierbei werden üblicherweise wässrige und lösemittelbasierte Kitte, insbesondere Kittlösungen, verwendet. Lösemittelkitte dürfen neuerdings aufgrund gesetzlicher Vorgaben nicht mehr eingesetzt werden. Wässrige Kitte neigen jedoch bisher zum Nachfallen (Materialschrumpf) bzw. Einsacken - gerade bei größeren Fugen - und werden aufgrund der zum Teil nicht perfekten Flankenhaftung beim Nachschleifen durch die Schleifmaschine wieder aus der Fuge gezogen. Daher werden oftmals zwei Arbeitsgänge benötigt, um die Fuge zu verschließen. Gerade im Sanierungsbereich ist die Flankenhaftung mitunter so minimal, dass ein Verkitten keinen dauerhaften Erfolg bringt, da der spröde Kitt herausbricht, insbesondere bei Belastung durch wiederholtes Quellen und Schwinden des Holzes.

US-A-3 891 582 offenbart Zementfugenmassen von Wandbausplatten und EP-1 983 014 beschreibt ein Parkettfugenkittsystem.

Es besteht daher ein Bedarf an verbesserten Kittspachtelmassen, insbesondere Parkettfugenkittlösungen, die diese Nachteile des Standes der Technik überwinden.

Es wurde gefunden, dass durch eine Faserarmierung die innere Festigkeit der Verkittung gesteigert werden kann und die Flankenhaftung ansteigen kann, da Fehlstellen besser überbrückt werden. Weiterhin wurde gefunden, dass das Gefüge in sich elastischer wird und damit weniger zum Herausbrechen neigt. Zudem ist die Verkittung nicht mehr so spröde. Durch das ausgebildete dreidimensionale Fasergefüge kann zudem das Einfallen der Fuge vermindert werden. Darüber hinaus können bei einer Verwendung in Verbindung mit elastischen Materialien Quell- und Schwindvorgänge mit der erfindungsgemäßen Kittspachtelmasse, insbesondere Parkettfugenkittlösung, auch besser abgefedert werden, so dass ein Herausbröckeln des Kitts vermindert oder verhindert werden kann.

Gemäß einem ersten Aspekt betrifft die vorliegende Erfindung eine Kittspachtelmasse, insbesondere Parkettfugenkittlösung, zum Verfugen von Holzböden, insbesondere Parkettböden, umfassend Wasser, mindestens ein Bindemittel, mindestens ein Polymer, mindestens ein Lösungsmittel, ausgewählt aus Alkoholen und/oder Glykolethern, und Fasern mit einer Länge von 10 mm oder weniger, wobei die Kittspachtelmasse 50 bis 98 Gew.% Wasser, 0,5-15 Gew.% des mindestens einen Bindemittels, 0,5-8 Gew.% der Fasern mit einer Länge von 10 mm oder weniger, jeweils bezogen auf die Kittspachtelmasse, enthält, wobei sich die Gew. %-Angaben auf 100 Gew.% in der Kittspachtelmasse ergänzen.

Gemäß einem weiteren Aspekt betrifft die vorliegende Erfindung ein Verfahren zum Verfugen eines Holzbodens, insbesondere Parkettbodens, umfassend ein Anrühren der erfindungsgemäßen Kittspachtelmasse, insbesondere Parkettfugenkittlösung, mit Holzstaub, und ein Verfugen des Parkettbodens mit der angerührten Kittspachtelmasse.

Zudem betrifft die vorliegende Erfindung die Verwendung der erfindungsgemäßen Kittspachtelmasse, insbesondere Parkettfugenkittlösung, zum Verfugen von Holzböden, insbesondere Parkettböden.

Weitere Aspekte der vorliegenden Erfindung sind den abhängigen Ansprüchen und der detaillierten Beschreibung zu entnehmen.

Die erfindungsgemäße Kittspachtelmasse, insbesondere Parkettfugenkittlösung, zum Verfugen von Holzböden, insbesondere Parkettböden, umfasst Wasser, mindestens ein Bindemittel, mindestens ein Polymer, mindestens ein Lösungsmittel und Fasern mit einer Länge von 10 mm oder weniger.

Als Kittspachtelmasse, insbesondere Parkettfugenkittlösung, wird hierbei eine pastöse Masse oder Lösung, bevorzugt Lösung verstanden, welche mit Holzstaub, bevorzugt der jeweiligen Holzart des Holzbodens, insbesondere eines Parketts, zu einer spachtelfähigen Masse angerührt werden kann. Hierzu muss sich eine spachtelfähige Masse mit dem Holzstaub ergeben können, weshalb nicht jede beliebige Spachtelmasse verwendet werden kann.

Gemäß bestimmten Ausführungsformen umfasst die erfindungsgemäße Kittspachtelmasse, insbesondere Parkettfugenkittlösung, 50 bis 98 Gew.%, bevorzugt 65-95 Gew.% Wasser, 0,5-15, bevorzugt 1-10 Gew.% des mindestens einen Bindemittels, 0,5-8, bevorzugt 1-5 Gew.% des mindestens einen Polymers, 0,5-15, bevorzugt 1-10 Gew.% des mindestens einen Lösungsmittels und 0,5-15, bevorzugt 1-10 Gew.% der Fasern mit einer Länge von 10 mm oder weniger, jeweils bezogen auf die Kittspachtelmasse, insbesondere Parkettfugenkittlösung, wobei sich die Gew.%-Angaben auf 100 Gew.% in der Kittspachtelmasse, insbesondere Parkettfugenkittlösung, ergänzen.

Die Fasern können hierbei ein dreidimensionales Fasergefüge beim Vermischen mit Holzstaub und Auftragen auf Parkettböden bilden und ermöglichen somit die verbesserte Flankenhaftung des Kitts.

Das Bindemittel ist jedoch bevorzugt auf Dispersionsbasis, beispielsweise auf Basis einer wässrigen Dispersion, und umfasst insbesondere solche, welche üblicherweise zum Verfugen von Parkettböden zum Einsatz kommen, z.B. Styrolacrylatcopolymere und/oder aliphatische Acrylsäureestercopolymere und/oder aliphatische Polyester-Polyurethanpolymere und/oder aliphatische Polyester-Polycarbonat-Polyurethanpolymere, beispielsweise Styrolacrylatcopolymere und/oder aliphatische Acrylsäureestercopolymere. Gemäß bestimmten Ausführungsformen umfasst das Bindemittel wasserunlösliche Polymere, bevorzugt in Dispersion.

Ebenso kann als Polymer ein solches eingesetzt werden, welches üblicherweise in Kittspachtelmassen, insbesondere Parkettfugenkittlösungen, verwendet wird, und ist nicht besonders beschränkt, ist jedoch bevorzugt ein wasserlösliches Polymer. Beispielsweise kann ein Polyether, beispielsweise auf Cellulosebasis, wie z.B. Celluloseether, Methylcellulose, Carboxymethylcellulose oder Methylhydroxyethylcellulose, bevorzugt Celluloseether oder Methylhydroxyethylcellulose, als Polymer verwendet werden. Gemäß bestimmten Ausführungsformen wird das Polymer als Pulver in die erfindungsgemäße Kittspachtelmasse, insbesondere Parkettfugenkittlösung, eingebracht und in dem Wasser gelöst.

Neben Wasser umfasst die erfindungsgemäße Kittspachtelmasse, insbesondere Parkettfugenkittlösung, auch weitere, bevorzugt wasserlösliche bzw. wassermischbare, Lösungsmittel, wie Ethanol und/oder Isopropanol, z.B. Ethanol, und/oder wie Dipropylenglykolmonomethylether und/oder Propylenglykol-n-butylether, die die Verarbeitbarkeit der Kittspachtelmasse, insbesondere Parkettfugenkittlösung, erleichtern, z.B. ein besseres und schnelleres Aushärten erzielen.

Gemäß bestimmten Ausführungsformen sind die Fasern ausgewählt aus Glasfasern, Polymerfasern, mineralischen Fasern und/oder natürlichen Fasern, wobei die Materialien hier nicht besonders beschränkt sind. Mit diesen Fasern lassen sich elastische Kitte erzielen, die weniger spröde sind und somit auch nicht zum Herausbröckeln nach dem Verfugen neigen. Bevorzugt haben die Fasern hierbei einen maximalen Durchmesser von 0,5 mm, weiter bevorzugt 0,3 mm, besonders bevorzugt 0,2 mm, und insbesondere 0,1 mm. Bei größeren Durchmessern wird die Verarbeitbarkeit erschwert. Gemäß bestimmten Ausführungsformen haben die Fasern eine Länge von 8 mm oder weniger, weiter bevorzugt 7 mm oder weniger. Gemäß bestimmten Ausführungsformen haben die Fasern eine Länge von mindestens 0,5 mm, bevorzugt mindestens 1 mm, weiter bevorzugt mindestens 2 mm.

Die erfindungsgenmäße Kittspachtelmasse, insbesondere Parkettfugenkittlösung, kann weiter gemäß bestimmten Ausführungsformen ein oder mehrere Additive, das ausgewählt ist aus der Gruppe, bestehend aus Netzmitteln, Entschäumern und Verdickern, umfassen. Die Netzmittel, Entschäumer und Verdicker sind hierbei nicht besonders beschränkt. Als Netzmittel können beispielsweise solche auf Polysiloxanbasis zum Einsatz kommen, als Entschäumer beispielsweise solche auf Polysiloxanbasis und/oder Mineralölbasis, und als Verdicker solche auf Polyurethan- und/oder Polyacrylatbasis.

Die vorliegende Erfindung betrifft weiter ein Verfahren zum Verfugen eines Holzbodens, insbesondere Parkettbodens unter Verwendung der erfindungsgemäßen Kittspachtelmasse, insbesondere Parkettfugenkittlösung, wobei die Art des Holzbodens, insbesondere Parkettbodens, nicht besonders beschränkt ist. Das Verfahren umfasst hierbei ein Anrühren der erfindungsgenäßen Kittspachtelmasse, insbesondere Parkettfugenkittlösung, mit Holzstaub, und ein Verfugen des Parkettbodens mit der angerührten Kittspachtelmasse.

Der verwendete Holzstaub ist hierbei nicht besonders beschränkt und ist insbesondere an den zu verfugenden Parkettboden angepasst, beispielsweise hinsichtlich der Farbe, bzw. damit das Verfugen nicht auffällt. Gemäß bestimmten Ausführungsformen wird der Holzstaub durch Schleifen mit einer Körnung von 60 bis 300, bevorzugt 80 bis 150 hergestellt. Das Anrühren ist ebenfalls nicht besonders beschränkt und kann beispielsweise auf jegliche mechanische Art erfolgen. Nach dem Anrühren kann die angerührte Kittspachtelmasse gemäß bestimmten Ausführungsformen wie bisherige Kittspachtelmassen innerhalb eines Zeitraums von 15 Minuten bis 1,5 Stunden aufgetragen werden, was abhängig ist von äußeren Einflüssen wie Verdunstung und Klima, beispielsweise Luftfeuchtigkeit. Unter extremen Bedingungen können sich auch kürzere oder längere Zeiträume ergeben. Gemäß bestimmten Ausführungsformen erfolgt das Verfugen bei einer Temperatur von 0 bis 40°C, bevorzugt 15 bis 30°C, insbesondere bei Raumtemperatur (20-25°C).

Nach dem Verfugen des Parkettbodens kann das Parkett noch feingeschliffen werden. Hierbei kann es gemäß bestimmten Ausführungsformen erforderlich sein, vor dem Feinschleifen noch bis zum Härten der Kittspachtelmasse, insbesondere Parkettfugenkittlösung, zu warten, beispielsweise für einen Zeitraum von 15 Minuten bis 3 Stunden, was wiederum abhängig ist von äußeren Faktoren wie Verdunstung, Klima, z.B. Luftfeuchtigkeit, etc.

Gemäß bestimmten Ausführungsformen wird der Parkettboden vor dem Verfugen geschliffen. Hierbei kann die Kittspachtelmasse, insbesondere Parkettfugenkittlösung, besser aufgetragen werden und auch besser an den Parkettboden angepasst werden.

Nach dem Verfugen des Parkettbodens und gegebenenfalls dem Feinschleifen ist gemäß bestimmten Ausführungsformen kein weiteres Verfugen erforderlich bzw. wird kein weiteres Verfugen durchgeführt. Durch die erfindungsgemäße Kittspachtelmasse, insbesondere Parkettfugenkittlösung, kann der Parkettboden derart verfugt werden, dass Nachfallen vermindert bzw. verhindert wird, so dass kein zweiter Verfugungsgang durchgeführt werden muss.

Der Parkettboden kann nach dem Verfugen des Parkettbodens und gegebenenfalls dem Feinschleifen gemäß bestimmten Ausführungsformen mit mindestens einem Lack und/oder Öl beschichtet werden. Hierdurch kann der Parkettboden widerstandsfähiger und/oder länger haltbar gemacht werden. Der verwendete Lack und/oder das verwendete Öl sind hierbei nicht besonders beschränkt und umfassen solche, welche üblicherweise für Parkettböden verwendet werden.

Ein üblicher Arbeitsgang zum Herstellen eines Parkettbodens unter Verwendung der erfindungsgemäßen Kittspachtelmasse, insbesondere Parkettfugenkittlösung, kann wie folgt aussehen:
Verlegen des Parkettbodens;
Gegebenenfalls Schleifen des Parkettbodens;
Verkitten des Parkettbodens unter Verwendung der erfindungsgemäßen Kittspachtelmasse, insbesondere Parkettfugenkittlösung;
Gegebenenfalls Feinschleifen des Parketts, insbesondere damit der Kitt nur noch in der Parkettfuge aber nicht mehr auf der Parkettfläche vorhanden ist;
Gegebenenfalls Oberflächenapplikation mit Lack oder Öl.

Gemäß einem weiteren Aspekt betrifft die vorliegende Erfindung die Verwendung der erfindungsgemäßen Kittspachtelmasse, insbesondere Parkettfugenkittlösung, zum Verfugen von Parkettböden.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss anhand einiger beispielhafter Ausführungsformen dargestellt, die diese jedoch nicht einschränken.

### Beispiel 1

Eine erste beispielhafte erfindungsgemäße Kittspachtelmasse wird angefertigt, indem 65-95 Gew.% Wasser, 1-10 Gew.% Ethanol, 1-10 Gew.% eines Styrolacrylatcopolymers als Bindemittel, 1-5 Gew.% Celluloseether als Polymer, sowie ggf. Netzmittel, Entschäumer, und Verdicker miteinander gemischt und verrührt werden und zu dieser Mischung 1-10 Gew.% Glasfasern mit einer maximalen Länge von 10 mm und einem maximalen Durchmesser von 0,1 mm zugegeben und eingerührt werden, wobei sich Gew.%-Angaben auf 100 Gew.% in der Kittspachtelmasse ergänzen. Es ergibt sich eine erfindungsgemäße Parkettfugenkittlösung als Kittspachtelmasse.

Die sich ergebende Kittspachtelmasse wird mit Holzstaub vermischt und auf einen abgeschliffenen Parkettboden aufgetragen.

Für die Verarbeitung auf einem beispielhaften Parkettboden werden beispielgemäß folgende Schritte durchgeführt:
1. Das Gebinde wird vor Gebrauch auf Raumtemperatur kommen gelassen und gut aufgeschüttelt.
2. Die Kittspachtelmasse wird mit feinem Schleifstaub (Korn 100) der zu verkittenden Holzart auf dem Untergrund vermischt und zu einer spachtelfähigen Masse angeteigt.
3. Danach wird der gesamte Parkettboden mit einem Flächenspachtel vollständig abgespachtelt.
4. Nach ca. 15 - 25 Minuten Trocknungszeit ist die Schleifbarkeit der gekitteten Fläche gegeben. Nach 30-120 Minuten wird das Parkett mit einem Schleifpapier Korn 100 (Walzenschleifmaschine) feingeschliffen. Bei sehr hohen Anforderungen an die Oberflächenqualität kann ein zusätzlicher Schleifgang erfolgen, beispielsweise mit einem SCHLEIFGITTER Korn 120. Nach dem Verfugen und Schleifen können die verwendeten Werkzeuge mit Wasser gereinigt werden.

### Verbrauchsdaten:

Der Verbrauch liegt je nach Fugengröße bei ca. 50 - 100 ml/m².

Die Reichweite pro Liter liegt je nach Fugengröße bei 10 - 20 m².

### Vergleichsbeispiel 1

Vergleichsbeispiel 1 entspricht Beispiel 1, außer dass anstelle der ersten beispielhaften Kittspachtelmasse eine übliche Kittspachtelmasse des Stands der Technik verwendet wird. Nach dem Feinschleifen zeigen sich im Vergleich zu Beispiel 1 ein vermehrtes Nachfallen der Kittspachtelmasse und ein teilweises Herausziehen aus den Fugen.

Durch die Faserarmierung mit z.B. Glasfasern kann bei den erfindungsgemäßen Kittspachtelmassen, insbesondere Parkettfugenkittlösungen, das Nachfallen der Kittfuge deutlich vermindert, die Flankenhaftung erhöht (vermindert das "Rausziehen" des Kitts durch die Parkettschleifmaschine) und ein mehrmaliges Abspachteln ggf. überflüssig werden, so dass auch breitere Parkettfugen von 1 - 3 mm in nur einem Arbeitsgang verspachtelt werden können. Mit den erfindungsgemäßen Kittspachtelmassen, insbesondere Parkettfugenkittlösungen, sind also eine Steigerung bei der Verarbeitungssicherheit und eine Zeitersparnis beim Verfugen möglich. Darüber hinaus können die erfindungsgemäßen Kittspachtelmassen, insbesondere Parkettfugenkittlösungen, auch bei Schwingböden sowie Bestandsböden mit z.B. durch Pflegemittel verunreinigter Fuge eingesetzt werden, für die bisher keine optimale Lösung vorhanden war.

## Patentansprüche

1. Kittspachtelmasse zum Verfugen von Holzböden, umfassend
Wasser,
mindestens ein Bindemittel,
mindestens ein Polymer,
mindestens ein Lösungsmittel, ausgewählt aus Alkoholen und/oder Glykolethern, und
Fasern mit einer Länge von 10 mm oder weniger, wobei die Kittspachtelmasse 50 bis 98 Gew.% Wasser, 0,5-15 Gew.% des mindestens einen Bindemittels, 0,5-8 Gew.% des mindestens einen Polymers, 0,5-15 Gew.% des mindestens einen Lösungsmittels und 0,5-15 Gew.% der Fasern mit einer Länge von 10 mm oder weniger, jeweils bezogen auf die Kittspachtelmasse, enthält, wobei sich die Gew.%-Angaben auf 100 Gew.% in der Kittspachtelmasse ergänzen.

2. Kittspachtelmasse nach Anspruch 1, wobei die Fasern ausgewählt sind aus Glasfasern, Polymerfasern, mineralischen Fasern und/oder natürlichen Fasern.

3. Kittspachtelmasse nach einem der vorigen Ansprüche, wobei das mindestens eine Bindemittel Styrolacrylatcopolymere und/oder aliphatische Acrylsäureestercopolymere und/oder aliphatische Polyester-Polyurethanpolymere und/oder aliphatische Polyester-Polycarbonat-Polyurethanpolymere umfasst.

4. Kittspachtelmasse nach einem der vorigen Ansprüche, wobei das mindestens eine Polymer wasserlöslich ist.

5. Kittspachtelmasse nach einem der vorigen Ansprüche, weiter umfassend ein oder mehrere Additive, das ausgewählt ist aus der Gruppe, bestehend aus Netzmitteln, Entschäumern und Verdickern.

6. Verfahren zum Verfugen eines Holzbodens, umfassend
Anrühren der Kittspachtelmasse nach einem der vorigen Ansprüche mit Holzstaub, und Verfugen des Parkettbodens mit der angerührten Kittspachtelmasse.

7. Verfahren nach Anspruch 6, wobei nach dem Verfugen des Parkettbodens das Parkett feingeschliffen wird.

8. Verfahren nach Anspruch 6 oder 7, wobei der Parkettboden vor dem Verfugen geschliffen wird.

9. Verfahren nach einem der Ansprüche 6 bis 8, wobei nach dem Verfugen des Parkettbodens und ggf. des Feinschleifens kein weiteres Verfugen durchgeführt wird.

10. Verfahren nach einem der Ansprüche 6 bis 9, wobei der Parkettboden nach dem Verfugen des Parkettbodens und ggf. des Feinschleifens mit mindestens einem Lack und/oder Öl beschichtet wird.

11. Verwendung einer Kittspachtelmasse nach einem der Ansprüche 1 bis 5 zum Verfugen von Holzböden.

## Claims

1. Mastic filler for jointing wooden floors, comprising water,
at least one binder,
at least one polymer,
at least one solvent, selected from alcohols and/or glycol ethers, and fibres with a length of 10 mm or less, wherein the mastic filler contains 50 to 98 percent by weight of water, 0.5-15 percent by weight of the at least one binder, 0.5-8 percent by weight of the at least one polymer, 0.5-15 percent by weight of the at least one solvent and 0.5-15 percent by weight of the fibres with a length of 10 mm or less, each relative to the mastic filler, wherein the percent by weight figures jointly comprise 100 percent by weight in the mastic filler.

2. Mastic filler according to claim 1, wherein the fibres are selected from glass fibres, polymer fibres, mineral fibres and/or natural fibres.

3. Mastic filler according to any one of the preceding claims, wherein the at least one binder comprises styrene acrylic copolymers and/or aliphatic acrylic acid ester copolymers and/or aliphatic polyester polyurethane polymers and/or aliphatic polyester polycarbonate polyurethane polymers.

4. Mastic filler according to any one of the preceding claims, wherein the at least one polymer is water-soluble.

5. Mastic filler according to any one of the preceding claims, further comprising one additive or a plurality thereof selected from the group consisting of wetting agents, defoaming agents and thickening agents.

6. Method of jointing a wooden floor, comprising mixing the mastic filler according to any one of the preceding claims with wood dust, and jointing the parquet floor with the mixed mastic filler.

7. Method according to claim 6, wherein after jointing the parquet floor the parquet is fine-sanded.

8. Method according to claim 6 or 7, wherein the parquet floor is sanded before jointing.

9. Method according to any one of claims 6 to 8, wherein no further jointing is performed after jointing the parquet floor and any fine-sanding if appropriate.

10. Method according to any one of claims 6 to 9, wherein after jointing the parquet floor and any appropriate fine-sanding the parquet floor is coated with at least one lacquer and/or oil.

11. Use of a mastic filler according to any one of claims 1 to 5 for jointing wooden floors.

## Revendications

1. Composition de mastic pour le jointoiement de planchers en bois, comprenant :
de l'eau,
au moins un liant,
au moins un polymère,
au moins un solvant choisi parmi les alcools et/ou les éthers de glycol et
des fibres ayant une longueur de 10 mm ou moins, la composition de mastic contenant de 50 à 98 % en poids d'eau, de 0,5 à 15 % en poids dudit au moins un liant, de 0,5 à 8 % en poids dudit au moins un polymère, de 0,5 à 15 % en poids dudit au moins un solvant et de 0,5 à 15 % en poids des fibres ayant une longueur de 10 mm ou moins, chaque fois par rapport à la composition de mastic, les pourcentages en poids totalisant 100 % en poids de la composition de mastic.

2. Composition de mastic selon la revendication 1, dans laquelle les fibres sont choisies parmi les fibres de verre, les fibres polymères, les fibres minérales et/ou les fibres naturelles.

3. Composition de mastic selon l'une des revendications précédentes, dans laquelle ledit au moins un liant comprend des copolymères d'acrylate de styrène et/ou des copolymères d'ester d'acide acrylique aliphatiques et/ou des polymères de polyester-polyuréthane aliphatiques et/ou des polymères de polyester-polycarbonate-polyuréthane aliphatiques.

4. Composition de mastic selon l'une des revendications précédentes, dans laquelle ledit au moins un polymère est soluble dans l'eau.

5. Composition de mastic selon l'une des revendications précédentes, comprenant en outre un ou plusieurs additifs choisis dans le groupe constitué par les agents mouillants, les antimoussants et les épaississants.

6. Procédé de jointoiement d'un plancher en bois, consistant à mélanger la composition de mastic selon l'une des revendications précédentes avec de la poussière de bois et à jointoyer le parquet avec la composition de mastic mélangée.

7. Procédé selon la revendication 6, selon lequel le parquet est finement poncé après le jointoiement du parquet.

8. Procédé selon la revendication 6 ou 7, selon lequel le parquet est poncé avant le jointoiement.

9. Procédé selon l'une des revendications 6 à 8, selon lequel aucun autre jointoiement n'est effectué après le jointoiement du parquet et, éventuellement, le ponçage fin.

10. Procédé selon l'une des revendications 6 à 9, selon lequel le parquet est enduit d'au moins un vernis et/ou d'une huile après le jointoiement du parquet et, éventuellement, le ponçage fin.

11. Utilisation d'une composition de mastic selon l'une des revendications 1 à 5 pour le jointoiement de planchers en bois.
